# EUROPEAN PATENT APPLICATION

(11) **EP 4 703 681 A1**
(43) Date of publication of application: **04.03.2026**
(21) Application number: 24222714.8
(22) Date of filing: 23.12.2024
(51) Int. Cl.: G01C 21/00

(54) **GRID MAP AND ROBOTIC MOWER**

(30) Priority: 27.08.2024 CN 202411190032
(71) Applicant: Nanjing Chervon Industry Co., Ltd., Nanjing, Jiangsu 211106 (CN)
(72) Inventor: CHEN, Si, Nanjing, Jiangsu 211106, (CN)
(74) Representative: Sun, Yiming

(57) **Abstract**

Provided is a grid map. The grid map includes: a first-layer map including multiple first grids; and a second-layer map including multiple second grids, where the number of the multiple second grids is greater than the number of the multiple first grids, and multiple second grids are mapped by each first grid. When the multiple second grids mapped by the first grid have a same attribute value, the attribute value is stored in the first grid. The first grid is alternatively configured to store index information, and the index information is configured to point to a data structure of the plurality of second grids mapped by the first grid.

## Description

### RELATED APPLICATION INFORMATION

The present application claims the benefit under 35 U.S.C. §119(a) of Chinese Patent Application No. 202411190032.2, filed on Aug. 27, 2024, which application is incorporated herein by reference in their entirety.

### TECHNICAL FIELD

The present application relates to the technical field of grid maps and, in particular, to a grid map and a robotic mower.

### BACKGROUND

In the application scenario where a map is made along a site boundary, a robotic mower starts from a charging pile, walks around the site boundary, and returns to the charging pile. During the walk, the robotic mower records coordinates and marks them on the map, thereby making the map. After the map has been made, the map is stored in the form of a grid map.

In a traditional manner, when the grid map is stored, a memory is allocated to each grid in the grid map. If one grid is 0.1 m * 0.1 m, a map for 5000 square meters would have 500000 grids. If each grid occupies 8 bytes, the map would occupy a memory of at least 3 MB. Considering the grids for non-working regions and irregular maps, the memory occupied by the map sometimes far exceeds 3 MB. In fact, the maximum dimension of the map is 250 m * 250 m. Correspondingly, the memory occupied by the map is about 50 MB. Therefore, with the traditional storage manner, a large memory space is occupied, and the time required for saving and loading the map is relatively long.

This part provides background information related to the present application, and the background information is not necessarily the existing art.

### SUMMARY

An object of the present application is to solve or at least alleviate part or all of the preceding problems. Therefore, an object of the present application is to provide a grid map and a robotic mower.

To achieve the preceding object, the present application adopts the technical solutions below.

A grid map includes: a first-layer map including multiple first grids; and a second-layer map including multiple second grids, where the number of the multiple second grids is greater than the number of the multiple first grids, and multiple second grids are mapped by each first grid. When the multiple second grids mapped by the first grid have a same attribute value, the attribute value is stored in the first grid.

The grid map provided in the present application adopts a layered structure, where the multiple second grids in the second-layer map can be compressed based on the first grid in the first-layer map. Specifically, when the multiple second grids in the second-layer map that are mapped by the first grid in the first-layer map have a same attribute value, the attribute value is stored in the first grid. The attribute value of the single first grid can represent the attribute value of each of the multiple second grids corresponding to the first grid, thereby significantly reducing a memory space required for storing the grid map and helping optimize the memory space. Additionally, the time required for saving and loading the grid map is shortened, thereby helping improve the efficiency with which the grid map is saved and loaded.

In some examples, when the multiple second grids mapped by the first grid have different attribute values, index information is stored in the first grid, where the index information is configured to point to a data structure of the multiple second grids mapped by the first grid.

In some examples, when the first grid does not belong to a preset working region range, the index information corresponding to the first grid is set to null.

In some examples, the data structure is configured to describe at least one attribute of the multiple second grids corresponding to the first grid.

In some examples, the data structure is an array, and each element of the array is configured to describe at least one attribute of a respective one of the multiple second grids.

In some examples, the data structure is a matrix, and each element of the matrix is configured to describe at least one attribute of a respective one of the multiple second grids.

In some examples, if an attribute of the grid map is updated, it is determined whether a new data structure needs to be created or an existing data structure needs to be deleted; and based on a determination result, the first-layer map and/or the second-layer map are updated so that the grid map is updated.

In some examples, a compression ratio of the grid map is higher than or equal to 60%.

A robotic mower stores the grid map described in any one of the preceding examples.

In some examples, map parameter ranges supported by the robotic mower are as follows: a site area is no larger than 10000 square meters, the resolution of a second grid is higher than 0.2 m * 0.2 m, and the memory occupied by the grid map is no greater than 10 MB.

A grid map includes: a first-layer map including multiple first grids; and a second-layer map including multiple second grids, where the number of the multiple second grids is greater than the number of the multiple first grids, and multiple second grids are mapped by each first grid. The first grid is configured to store index information, and the index information is configured to point to a data structure of the multiple second grids mapped by the first grid.

The grid map provided in the present application adopts a layered structure, where the multiple second grids in the second-layer map can be indexed based on the first grid in the first-layer map, thereby helping improve the efficiency with which the grid map is loaded.

In some examples, when the first grid does not belong to a preset working region range, the index information corresponding to the first grid is set to null.

In some examples, the number of the multiple second grids is greater than or equal to four times the number of the multiple first grids.

In some examples, the data structure is configured to describe at least one attribute of the multiple second grids corresponding to the first grid.

In some examples, the data structure is an array, and each element of the array is configured to describe at least one attribute of a respective one of the multiple second grids.

In some examples, the data structure is a matrix, and each element of the matrix is configured to describe at least one attribute of a respective one of the multiple second grids.

In some examples, when the multiple second grids mapped by the first grid have a same attribute value, the index information stored in the first grid is deleted, and the attribute value is stored in the first grid.

In some examples, the grid map further includes a third-layer map. The third-layer map includes multiple third grids. The number of the multiple third grids is greater than the number of the multiple second grids. Multiple third grids are mapped by each second grid.

A robotic mower stores the grid map described in any one of the preceding examples.

In some examples, map parameter ranges supported by the robotic mower are as follows: a site area is no larger than 10000 square meters, the resolution of a second grid is higher than 0.2 m * 0.2 m, and the memory occupied by the grid map is no greater than 10 MB.

### BRIEF DESCRIPTION OF DRAWINGS

FIG. 1 is a schematic diagram showing the mapping relationship between a first grid and multiple second grids according to the present application;
FIG. 2A is a schematic diagram of a grid map before compression according to the present application;
FIG. 2B is a schematic diagram of a grid map after compression according to the present application;
FIG. 3 is a schematic view of the compositional structure of a robotic mower according to the present application;
FIG. 4A is a comparison chart of map saving time for different sites adopting different map optimization manners according to the present application; and
FIG. 4B is a comparison chart of map sizes for different sites adopting different map optimization manners according to the present application.

### Reference list

- 110: robotic mower
- 111: satellite positioning module
- 112: wireless communication module
- 113: controller
- 114: housing
- 115: working assembly
- 116: walking assembly

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

It should be noted that the terms "first", "second", etc. in the detailed description and claims of the present application and the above-mentioned drawings are used to distinguish similar objects, and are not necessarily used to describe a specific order or sequence. It should be understood that the data used in this way can be interchangeable where appropriate, so that the embodiments of the present application described herein can be implemented in an order other than those illustrated or described herein. In addition, the term "comprising" and any variation thereof are intended to cover non-exclusive inclusions, for example, a process, method, system, product or device comprising a series of steps or units is not necessarily limited to those steps or units clearly listed, but may include other steps or units that are not clearly listed or inherent to these processes, methods, products or devices.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions proposed in the present application are further described in detail in conjunction with drawings and examples.

A grid map provided in this example includes a first-layer map and a second-layer map. The first-layer map includes multiple first grids. The second-layer map includes multiple second grids. The number of the second grids is greater than the number of the first grids, and multiple second grids are mapped by each first grid. When the multiple second grids mapped by the first grid have a same attribute value, the attribute value is stored in the first grid.

It is to be noted that in this example, a layered grid structure similar to a pyramid is configured to describe the grid map. The grid map includes the first-layer map and the second-layer map. Large grids are adopted in the first-layer map while small grids are adopted in the second-layer map. That is, the resolution of the first grid is lower than the resolution of each of the multiple second grids, which may be simply understood as follows: the dimension of the first grid is larger than the dimension of the second grid. For example, the resolution of the first grid is 1 m * 1 m, and the resolution of the second grid is 0.1 m * 0.1 m. In addition, a grid mapping relationship between the first-layer map and the second-layer map is preset. That is, the correspondence between a first grid in the first-layer map and the second grids in the second-layer map is known. The grip mapping relationship may be characterized in various forms such as a pointer, an array, or a matrix, and other data structures. Specifically, in C++, a pointer points to a memory address. In other languages such as Java, a memory address is encapsulated, and it may be considered that a pointer points to a data structure such as an array or a matrix. For example, one pointer may be stored in the first grid. The pointer points to N * N second grids and is configured to characterize the mapping relationship between the first grid and the N * N second grids.

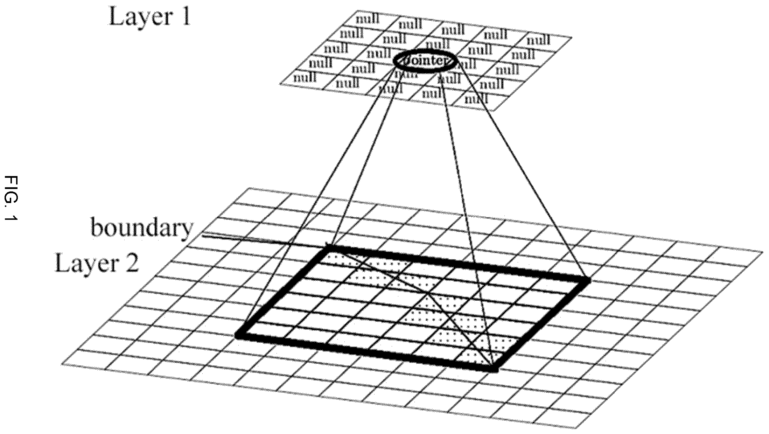

The mapping relationship between the first grid and the multiple second grids is shown in FIG. 1. In FIG. 1, layer 1 and layer 2 represent the first-layer map and the second-layer map, respectively. Each small grid in layer 1 is a first grid, and each small grid in layer 2 is a second grid. The first grid marked with a bolded solid-line ellipse in layer 1 has a mapping relationship with the multiple second grids marked with a bolded solid-line rectangle in layer 2. In layer 1, nulls and a pointer are shown. In addition, a boundary is shown. In layer 2, the shaded portion within the bolded solid-line rectangle represents the second grids passed by the boundary.

The types and number of attributes may be preset according to actual application conditions. For example, one or more attributes may exist and may include, but are not limited to, at least one of the following types: whether an obstacle exits (free region/obstacle region), whether a region is bumpy (bumpy region/smooth region), whether a region is a working region (work region/non-working region/unknown region), whether a region is a boundary region (boundary region/non-boundary region), and whether a region is strong or weak in receiving a positioning signal (strong region in receiving the positioning signal/weak region in receiving the positioning signal).

In this example, when the multiple second grids mapped by the first grid have a same attribute value, the attribute value may be stored in the first grid. In this case, only one piece of memory needs to be allocated to the first grid, and no memories need to be allocated to the multiple second grids mapped by the first grid. The mapping relationship between the first grid and the multiple second grids and the attribute value stored in the first grid can be configured to characterize the attribute values of the multiple second grids mapped by the first grid. In this manner, the multiple second grids corresponding to the first grid can be compressed through the first grid, thereby significantly reducing an occupied memory space and helping optimize the memory space. Additionally, the time required for saving and loading the grid map is shortened, thereby helping improve the efficiency with which the grid map is saved and loaded.

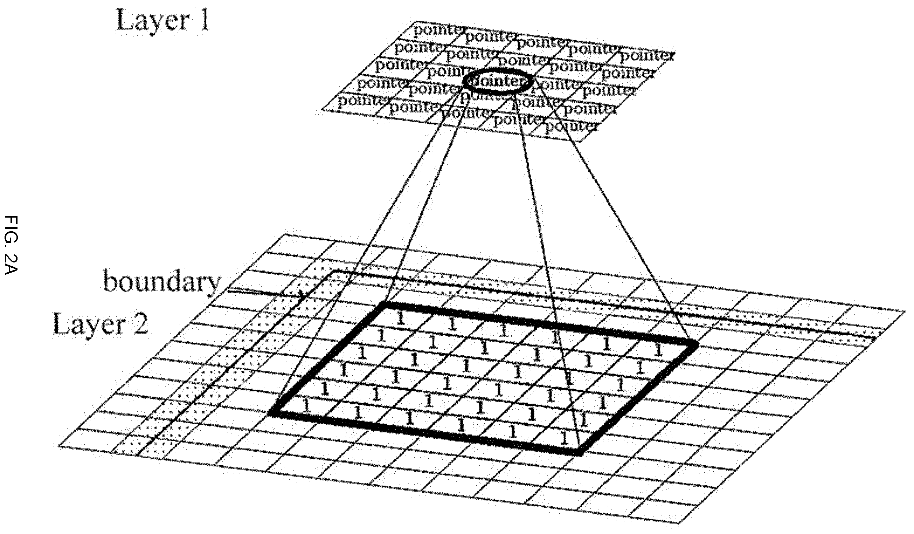

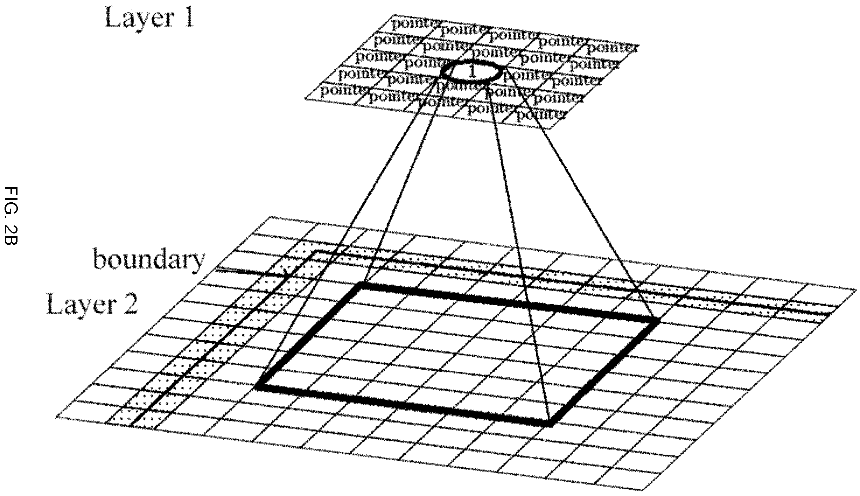

FIGS. 2A and 2B show a grid map before compression and a grid map after the compression, respectively. FIG. 2B is the compression result of FIG. 2A. In FIG. 2A, the multiple second grids marked within a bolded solid-line rectangle in layer 2 have the same value 1 as a certain attribute. In this case, the attribute value 1 may be stored in the first grid marked with a bolded solid-line ellipse in layer 1. Thus, the result in FIG. 2B is obtained. Through the mapping relationship between the first grid marked with the bolded solid-line ellipse in layer 1 and the multiple second grids marked with the bolded solid-line rectangle in layer 2 and the attribute value 1 stored in the first grid marked with the bolded solid-line ellipse in layer 1, the attribute value of each of the multiple second grids marked with the bolded solid-line rectangle in layer 2 and corresponding to the first grid marked with the bolded solid-line ellipse in layer 1 can be determined as 1. In this case, only one piece of memory needs to be allocated to the first grid marked with the bolded solid-line ellipse in layer 1, and no memories need to be allocated to the multiple second grids marked with the bolded solid-line rectangle in layer 2. Thus, the memory space is optimized.

It is to be noted that when multiple attributes exist, the values of multiple attributes may be stored together through a single grid map, or multiple grid maps may be provided and each of the multiple grid maps may manage one attribute. The specific manner may be flexibly configured according to the actual application requirements. If a single grid map is used to manage the multiple attributes, the compression can be implemented only when the N * N second grids all have the same values for the multiple attributes, thus the compression ratio is reduced. If multiple grid maps are used to manage the multiple attributes, the compression can be implemented as long as the N * N second grids have the same value for a single attribute, thus the compression ratio is increased. However, the multiple grid maps may occupy a larger space and reduce an access speed. Therefore, each approach has its advantage.

In some examples, optionally, when the multiple second grids mapped by the first grid have different attribute values, index information is stored in the first grid. The index information is configured to point to a data structure of the multiple second grids mapped by the first grid.

Specifically, when the multiple second grids mapped by the first grid have different attribute values, the multiple second grids cannot be compressed. In this case, the index information may be stored in the first grid, and the mapping relationship between the first grid and the multiple second grids is characterized through the index information. The index information is configured to point to the data structure of the multiple second grids mapped by the first grid. For example, the data structure may be a pointer, an array, and a matrix.

In some examples, optionally, when the first grid does not belong to a preset working region range, the index information corresponding to the first grid is set to null.

The preset working region range may refer to a working region range preset according to actual requirements. It is to be noted that when a map is made for a certain site, some non-working regions may exist in the region. If the areas of the non-working regions occupy a relatively large proportion of the area of the entire site, extra memories may need to be allocated to many useless regions in the map when the made map is stored. As a result, the memory space is wasted. To solve the preceding problem, when it is determined that the first grid does not belong to the preset working region range, the index information corresponding to the first grid may be directly set to null. That is, memories do not need to be allocated to the non-working regions outside the preset working region range. Furthermore, the preceding configuration may be understood as follows: the non-working regions have the same attribute of which value is null, which is similar to the compression.

In some examples, optionally, the data structure is configured to describe at least one attribute of the multiple second grids corresponding to the first grid.

The data structure may be configured to describe the attribute of the multiple second grids corresponding to the first grid, and the attribute value corresponding to the attribute may be characterized by a numerical value in the data structure.

In some examples, optionally, the data structure is an array, and each element of the array is configured to describe the attribute value of a respective one of the multiple second grids.

Specifically, when the data structure is the array, if one attribute exists, the attribute value of the second grids may be described through a single array. If multiple attributes exist, the multiple attribute values of the second grids may be described through multiple arrays or a single array, wherein each element of the single array represents a list of values for the multiple attributes. Each element of the array is configured to characterize the attribute value or values of the respective second grid. For example, assuming that nine second grids are mapped by one first grid, the attribute values of these nine second grids may be represented through 0, 1, 2,... , 8 elements in the array.

In some examples, optionally, the data structure is a matrix, and each element of the matrix is configured to describe the attribute value of a respective one of the multiple second grids.

Similarly, when the data structure is the matrix, if multiple attributes exist, the multiple attribute values of the second grids may be described through a single matrix or multiple matrixes. If one attribute exists, the attribute value of the second grids may be described through a single matrix. For example, a (row, column) element in the matrix may describe a single attribute value or a list of values for the multiple attributes. Each element of the matrix is configured to characterize the attribute value or values of the respective second grid. For example, assuming that nine second grids are mapped by one first grid, the attributes of these nine second grids may be represented through (0,0), (0,1),..., (2,2) elements in the matrix.

In some examples, optionally, if the attribute values of the grid map needs to be updated, it is determined whether a new data structure needs to be created or an existing data structure needs to be deleted; and based on a determination result, the first-layer map and/or the second-layer map are updated so that the grid map is updated.

It is to be noted that in an actual application process, when a map is made, the environment of a site may change at any time. For example, a certain region changes from an obstacle region to a free region, or a certain region changes from a boundary region to a non-boundary region. Therefore, it is necessary to update the saved grid map according to actual detected conditions so that the accuracy of the grid map is ensured.

If it is determined that the attribute of the grid map is updated, it is first determined whether a new data structure needs to be created or the existing data structure needs to be deleted. Specifically, if the multiple second grids mapped by the first grid have the same attribute value (that is, the multiple second grids mapped by the first grid can be compressed) at a previous detection moment and the multiple second grids mapped by the first grid have different attribute values (that is, the multiple second grids mapped by the first grid cannot be compressed) at a current detection moment, a new data structure needs to be created in this case. If the multiple second grids mapped by the first grid have different attribute values (that is, the multiple second grids mapped by the first grid cannot be compressed) at a previous detection moment and the multiple second grids mapped by the first grid have the same attribute value (that is, the multiple second grids mapped by the first grid can be compressed) at a current detection moment, the existing data structure needs to be deleted in this case. If the multiple second grids mapped by the first grid have the same attribute value (that is, the multiple second grids mapped by the first grid can be compressed) at a previous detection moment and the multiple second grids mapped by the first grid also have the same attribute value (that is, the multiple second grids mapped by the first grid can be also compressed) at a current detection moment, a new data structure does not need to be created, the existing data structure does not need to be deleted, and there may be two possible situations in this case. One is that the attribute value corresponding to the previous detection moment is different from the attribute value corresponding to the current detection moment. The other is that the attribute value corresponding to the previous detection moment is the same as the attribute value corresponding to the current detection moment.

After it is determined whether a new data structure needs to be created or the existing data structure needs to be deleted, the first-layer map and/or the second-layer map may be updated based on the determination result. Specifically, when it is determined that a new data structure needs to be created, a memory is first allocated for creating the new data structure. Then, the attribute value stored in the first grid at the previous detection moment is assigned to each element in the data structure. Next, a second grid with an updated attribute is set to the updated attribute value. When it is determined that the existing data structure needs to be deleted, the data structure is deleted so that a memory is taken back, and the attribute value corresponding to the multiple second grids with the same attribute value is stored in the first grid that maps the multiple second grids. When it is determined that neither a new data structure needs to be created nor the existing data structure needs to be deleted, if the attribute value corresponding to the previous detection moment is different from the attribute value corresponding to the current detection moment, only the attribute value stored in the first grid needs to be modified. Thus, the grid map is updated.

In some examples, optionally, a compression ratio of the grid map is higher than or equal to 60%.

Specifically, compared with a single-layer grid map, the compression ratio of the grid map in this example is higher than or equal to 60%. For example, the compression ratio of the grid map in this example may be 70%, 80%, or 90% and is specifically determined according to an actual compression effect.

A robotic mower is provided in this example. The robotic mower stores the grid map described in any one of the preceding examples.

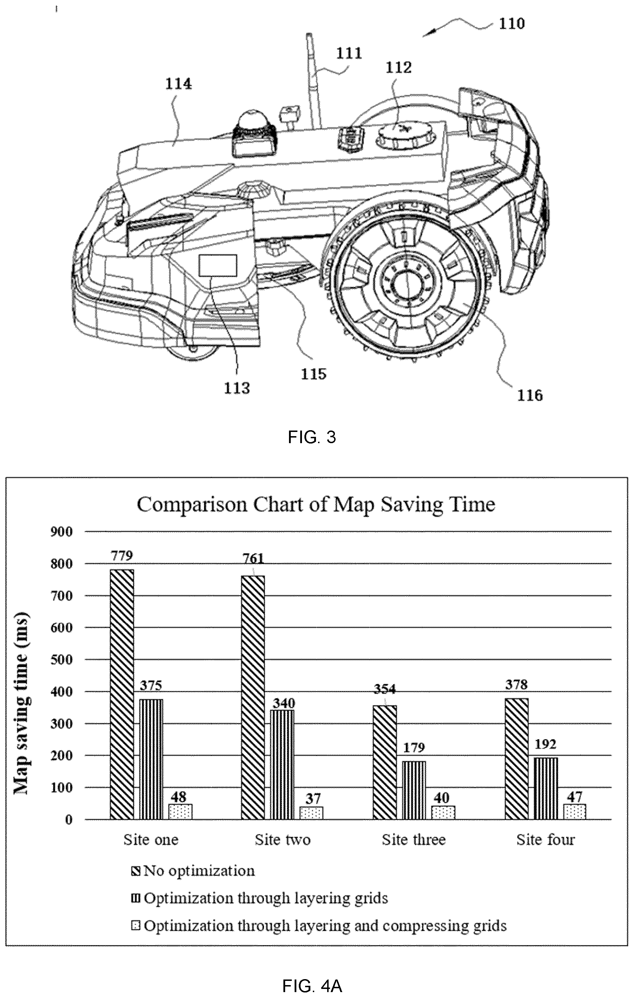

FIG. 3 shows the compositional structure of the robotic mower. As shown in FIG. 3, the robotic mower 110 includes a satellite positioning module 111, a wireless communication module 112, a controller 113, a housing 114, a working assembly 115, and a walking assembly 116. The satellite positioning module 111 can receive a satellite positioning signal. Satellite observation data regarding a current position of the robotic mower 110 from a global navigation satellite system (GNSS) is carried in the satellite positioning signal. Based on the satellite observation data, an initial rough current position of the robotic mower 110 can be obtained. The satellite positioning module 111 may include an antenna for receiving the preceding satellite positioning signal. Further, the satellite positioning module 111 may also include a computation unit for resolving the initial position and the like. The wireless communication module 112 can interact with a base station or a server to acquire differential calibration data returned by the base station or the server. The wireless communication module 112 may include a transceiver, a station, and like and may further include a digital-to-analog/analog-to-digital conversion unit and the like. The controller 113 is electrically connected to the preceding satellite positioning module 111 and the preceding wireless communication module 112 separately. The controller 113 can resolve the precise position of the robotic mower 110 based on the satellite positioning signal or the initial position provided by the satellite positioning module 111 and the differential calibration data provided by the wireless communication module 112. The controller 113 may be a microcontroller unit (MCU), a microprocessor unit (MPU), or the like. The housing 114 serves as the appearance body of the robotic mower 110. An accommodating space is formed in the housing 114 and can accommodate and support other components. The working assembly 115 includes at least a working member actually performing a task like a blade and includes a working motor driving the working member. The walking assembly 116 includes at least walking members such as walking wheels and a walking motor driving the walking members.

In some examples, the robotic mower 110 further includes a power supply device detachably connected to the housing 114, for example, a battery pack. The power supply device can supply electrical energy to the working motor and/or the walking motor described above and other components. Furthermore, the controller 113 includes a register, or the robotic mower 110 has a separate memory. The register/memory may be configured to store the grid map described in the preceding examples.

In some examples, optionally, map parameter ranges supported by the robotic mower are as follows: a site area is no larger than 10000 square meters, the resolution of a second grid is higher than 0.2 m * 0.2 m, and the memory occupied by the grid map is no greater than 10 MB.

For example, the robotic mower can support the following map parameters: the site area is 8000 square meters, the resolution of the second grid is higher than 0.15 m * 0.15 m, and the memory occupied by the grid map is 8 MB.

Another grid map provided in this example includes a first-layer map and a second-layer map. The first-layer map includes multiple first grids. The second-layer map includes multiple second grids. The number of the second grids is greater than the number of the first grids, and multiple second grids are mapped by each first grid. The first grid is configured to store index information, and the index information is configured to point to a data structure of the multiple second grids mapped by the first grid.

The index information points to the data structure of the multiple second grids mapped by the first grid such as an array or a matrix. The index information may be configured to characterize the mapping relationship between the first grid and the multiple second grids.

In some examples, optionally, when the first grid does not belong to a preset working region range, the index information corresponding to the first grid is set to null.

In the solution, the index information is set to null so that the case can be avoided where memories are allocated to non-working regions outside the preset working region range. Thus, a memory space is optimized, and the waste of the memory space is reduced.

In some examples, optionally, the number of the multiple second grids is greater than or equal to four times the number of the multiple first grids.

In this case, one first grid maps at least four second grids.

In some examples, optionally, the data structure is configured to describe at least one attribute of the multiple second grids corresponding to the first grid.

In some examples, optionally, the data structure is an array, and each element of the array is configured to describe at least one attribute of a respective one of the multiple second grids.

In some examples, optionally, the data structure is a matrix, and each element of the matrix is configured to describe at least one attribute of a respective one of the multiple second grids.

In some examples, optionally, when the multiple second grids mapped by the first grid have the same attribute value, the index information stored in the first grid is deleted, and the attribute value corresponding to the attribute is stored in the first grid.

Specifically, when the multiple second grids mapped by the first grid have the same attribute value, grid compression may be further performed. In this case, the index information stored in the first grid needs to be deleted, and the attribute value corresponding to the attribute is stored in the first grid. That is, the attribute value of each of the multiple second grids corresponding to the first grid can be determined through the mapping relationship between the first grid and the multiple second grids and the attribute value stored in the first grid, thereby helping further optimize the memory space.

In some examples, optionally, the grid map further includes a third-layer map. The third-layer map includes multiple third grids. The number of the multiple third grids is greater than the number of the multiple second grids. Multiple third grids are mapped by each second grid.

It is to be noted that during actual use, the attributes of the multiple second grids may vary significantly. In this case, fewer grids can be compressed, resulting in a relatively low compression ratio. To balance both the attribute difference and the compression ratio, a compromise may be made through the addition of a map layer. Specifically, the grid map includes the first-layer map, the second-layer map, and the third-layer map. The first-layer map includes the multiple first grids, the second-layer map includes the multiple second grids, and the third-layer map includes the multiple third grids. The number of the second grids is greater than the number of the first grids. Each first grid maps multiple second grids. The number of the third grids is greater than the number of the second grids. Each second grid maps multiple third grids. In this case, the preceding configuration may be simply understood as follows: that the first-layer map is a summary or an index of the second-layer map and the second-layer map is a summary or an index of the third-layer map. For example, the compression rate of the three layers of maps is 1:16:256 or 1:25:1225. The compression rate of the second layer may be the same as or different from the compression rate of the third layer, which may be flexibly set according to the actual application conditions specifically.

Another robotic mower is provided in this example. The robotic mower stores another grid map described in any one of the preceding examples.

For the compositional structure of the robotic mower, reference may be made to the preceding related description. The details are not repeated here.

In some examples, optionally, map parameter ranges supported by the robotic mower are as follows: a site area is no larger than 10000 square meters, the resolution of a second grid is higher than 0.2 m * 0.2 m, and the memory occupied by the grid map is no greater than 10 MB.

To verify the effectiveness of this solution, the storage of the grid map in the solution is separately evaluated below in terms of map saving time (time spent in saving the grid map) and a map size.

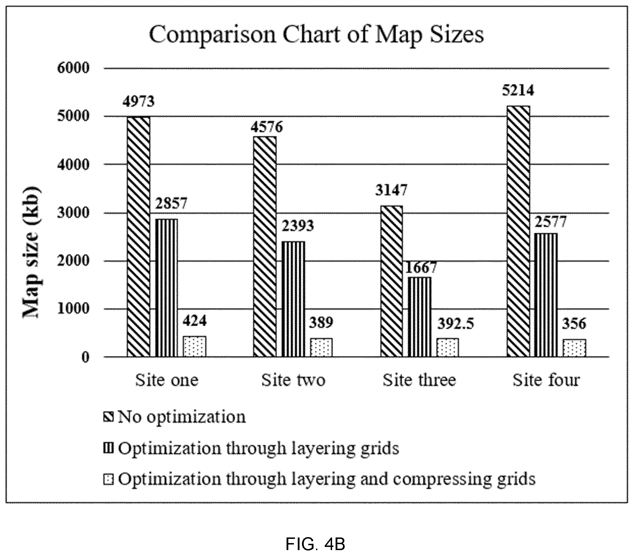

FIGS. 4A and 4B show a comparison chart of map saving time and a comparison chart of map sizes for different sites adopting different map optimization manners, respectively. Four sites are provided in total. The areas of the four sites are 5500 square meters, 4500 square meters, 3500 square meters, and 5800 square meters, respectively. The minimum grid resolution of each of the maps corresponding to the four sites is 0.15 m * 0.15 m. Each site adopts three optimization manners. The optimization manners of each site are listed from left to right: no optimization, optimization through layering grids (that is, index information corresponding to a first grid not belonging to the preset working region range is set to null), and optimization through layering and compressing grids (that is, based on the optimization through layering grids, the multiple second grids having the same attribute value are compressed). With the optimization through layering grids, the memory space is saved, which is actually implemented by allocating no memory to grids outside the preset working region range.

It may be learned from FIGS. 4A and 4B that the grid map optimization manners adopted in this solution are highly effective, especially the manner of layering and compressing grids. Compared with no optimization, map optimization is performed in the manner of layering and compressing grids, thereby reducing the memory occupied by the map by 90% and shortening the saving time by 90%.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A grid map, comprising:
a first-layer map comprising a plurality of first grids; and
a second-layer map comprising a plurality of second grids, wherein a number of the plurality of second grids is greater than a number of the plurality of first grids, and a plurality of second grids among the plurality of second grids are mapped by each first grid of the plurality of first grids;
wherein when the plurality of second grids mapped by the first grid have a same attribute value, the attribute value is stored in the first grid.

2. The grid map according to claim 1, wherein when the plurality of second grids mapped by the first grid have different attribute values, index information is stored in the first grid, wherein the index information is configured to point to a data structure of the plurality of second grids mapped by the first grid.

3. The grid map according to claim 2, wherein when the first grid does not belong to a preset working region range, the index information corresponding to the first grid is set to null.

4. The grid map according to claim 2, wherein the data structure is configured to describe at least one attribute of the plurality of second grids corresponding to the first grid.

5. The grid map according to claim 2, wherein the data structure is an array, and each element of the array is configured to describe at least one attribute of a respective one of the plurality of second grids.

6. The grid map according to claim 2, wherein the data structure is a matrix, and each element of the matrix is configured to describe at least one attribute of a respective one of the plurality of second grids.

7. The grid map according to claim 2, wherein in response to an attribute of the grid map being updated, it is determined whether a new data structure needs to be created or an existing data structure needs to be deleted; and
based on a determination result, the first-layer map and/or the second-layer map are updated so that the grid map is updated.

8. The grid map according to claim 3, wherein a compression ratio of the grid map is higher than or equal to 60%.

9. The grid map according to claim 1, wherein the number of the plurality of second grids is greater than or equal to four times the number of the plurality of first grids.

10. The grid map according to claim 7, wherein when the plurality of second grids mapped by the first grid have a same attribute value, the index information stored in the first grid is deleted, and the attribute value is stored in the first grid.

11. The grid map according to claim 2, further comprising a third-layer map, wherein the third-layer map comprises a plurality of third grids, a number of the plurality of third grids is greater than the number of the plurality of second grids, and a plurality of third grids among the plurality of third grids are mapped by each second grid of the plurality of second grids.

12. A robotic mower, storing the grid map according to claim 1.

13. The robotic mower according to claim 12, wherein map parameter ranges supported by the robotic mower are as follows: a site area is no larger than 10000 square meters, a resolution of a second grid is higher than 0.2 m * 0.2 m, and a memory occupied by the grid map is no greater than 10 MB.

14. The robotic mower according to claim 12, wherein a saving time of the gird map is shortened by 90%.

15. The robotic mower according to claim 12, wherein the grid map is stored in a register of a controller or a separate memory.
